# EUROPÄISCHE PATENTANMELDUNG

(11) **EP 3 369 685 A1**
(43) Veröffentlichungstag der Anmeldung: **05.09.2018**
(21) Anmeldenummer: 18158899.7
(22) Anmeldetag: 27.02.2018
(51) Int. Cl.: B65G 57/18, B65G 47/14, B21F 23/00, B65G 21/10, B65G 15/10, B65G 69/16

(54) **VORRICHTUNG ZUM TRANSPORT LÄNGLICHER STÜCKE AN EINE AUFNAHMESTELLE UND ZU DEREN ABLAGE AN DIESER**

(30) Priorität: 01.03.2017 DE 102017104266
(71) Anmelder: WAFIOS Aktiengesellschaft, 72764 Reutlingen (DE)
(72) Erfinder: WOLF, Jürgen, 72141 Walddorfhäslach (DE); JETTER, Stefan, 72141 Walddorfhäslach (DE)
(74) Vertreter: Patentanwälte Geyer, Fehners & Partner mbB

(57) **Zusammenfassung**

Vorrichtung (5) zum Transport länglicher Werkstücke (10) an eine Aufnahmestelle (22) und zur Ablage an dieser ist eine Transportbahn mit einem ersten (6) und mindestens einem nachgeschalteten weiteren (14) Bahnabschnitt vorgesehen, wobei dem ersten Bahnabschnitt (6) eine Werkstückzuführung (4) zugeordnet ist. Ferner ist ein Grundgestell (38) vorgesehen, an dem der erste Bahnabschnitt (6) an seinem in Förderrichtung hinteren Endbereich um eine gestellfeste Achse (12) verschwenkbar gelagert ist. Die Bahnabschnitte (6, 14) sind mit ihren einander zugewandten Endbereichen um eine gemeinsame Gelenkstelle (15) zueinander verschwenkbar. Jedem Bahnabschnitt (6, 14) ist ein Bürstenriemen-Paar (7, 20) und ein geradliniges Trum mit jeweils einer Umlenkstelle (11, 12; 12, 53) an seinen beiden Enden zugeordnet, die Bürstenriemen-Paare (7, 20) werden synchron angetrieben. Dem Ende des letzten Bahnabschnitts (14) ist eine Auswerfereinheit (21) nachgeschaltet, an der die Werkstücke (10) über einen Abstreifer (50) aus dem Bürstenriemen-Paar (20) entnommen und an der Aufnahmestelle (22) abgelegt werden.

## Beschreibung

Die Erfindung bezieht sich auf eine Vorrichtung zum Transport länglicher Werkstücke an eine Aufnahmestelle und zur Ablage an dieser, mit einer Transportbahn, die einen ersten und mindestens einen diesem nachgeschalteten weiteren Bahnabschnitt umfaßt, wobei dem ersten Bahnabschnitt eine Werkstückzuführung zugeordnet ist.

Vorrichtungen zum Transport länglicher Werkstücke sind in vielen unterschiedlichen Ausgestaltungen bekannt (so etwa DE 10 2010 012 612 B3, DE 10 2013 206 655 B3, DE 31 43 269 A1).

Eine solche Transportvorrichtung, die mit einer Transportbahn arbeitet, welche einen ersten und mindestens einen diesem nachgeschalteten zweiten Bahnabschnitt umfaßt, wobei dem ersten Bahnabschnitt eine Werkstückzuführung zugeordnet ist, wird in der DE 10 2012 004 404 A1 beschrieben, wobei es darauf ankommt, über einen sehr langen Transportweg hinweg die Werkstücke transportieren zu können. Dabei umfaßt jeder der einander nachgeschalteten Bahnabschnitte einen endlosen Zahnriemen, der über ein zugeordnetes Riemenrad angetrieben wird und dem eine Führungsschiene zugeordnet ist. Dabei sind die Zahnriemen der zumindest zwei einander nachgeschalteten Bahnabschnitte um die Breite eines Riemenrades seitlich zueinander versetzt, wobei die von einem Zahnriemen angeförderten Werkstücke innerhalb einer Übergabestation vom anderen Zahnriemen zum Weitertransport übernommen werden.

Die von jedem Zahnriemen transportierten Werkstücke ragen mit ihrer umlaufenden Mantelfläche etwas über die Höhe der die aufnehmende Ausnehmung des Zahnriemens begrenzenden Zähne hinaus, wobei das Werkstück in diesem überstehenden Bereich auf der Oberseite der Führungsschiene anliegt und während des Transportes entlang der Führungsschiene auf dieser gleitet.

Diese bekannte Transportanordnung gestattet es, Transportbahnen über eine sehr große Länge zu realisieren und dabei auch längs der Transportbahn eine Richtungsänderung der Transportrichtung vorzusehen. Allerdings ist diese bekannte Vorrichtung wegen der Zuordnung von Führungsschienen zu den Transportbahnen sowie des seitlichen Versatzes aufeinanderfolgender Bahnabschnitte und den dies berücksichtigenden Übergabestationen relativ aufwendig.

Zudem ist die bekannte Vorrichtung auch nicht dafür geeignet, die transportierten Werkstücke an einer Aufnahmestelle lageorientiert abzulegen.

Ausgehend hiervon soll die Erfindung eine Vorrichtung zum Transport länglicher Werkstücke schaffen, die insbesondere zum Transport kurzer Stäbe (150 mm - 250 mm Länge) über nur relativ kurze Strecken geeignet ist und mittels derer diese Werkstücke lageorientiert an einer Aufnahmestelle abgelegt werden können.

Erfindungsgemäß wird dies erreicht durch eine Vorrichtung der eingangs genannten Art, mit einem Grundgestell, an dem der erste Bahnabschnitt an seinem in Förderrichtung hinteren Endbereich um eine gestellfeste Achse verschwenkbar gelagert ist, wobei die Bahnabschnitte mit ihren einander zugewandten Endbereichen jeweils um eine ihnen gemeinsame Gelenkstelle relativ zueinander verschwenkbar sind, jedem Bahnabschnitt ein endloses Bürstenriemen-Paar zugeordnet ist, jeder Bahnabschnitt ein geradlinig verlaufendes Trum mit jeweils einer Umlenkstelle an seinen beiden Enden aufweist, alle Bürstenriemen-Paare synchron angetrieben werden und an jeder Gelenkstelle zwischen zwei Bahnabschnitten die zu transportierenden Werkstücke vom Bürstenriemen-Paar des vorhergehenden Bahnabschnitts auf das des folgenden Bahnabschnitts übergeben werden, und mit einer dem Ende des letzten Bahnabschnitts nachgeschalteten Auswerfereinheit, an der die angeförderten Werkstücke über einen Abstreifer einzeln aus dem Bürstenriemen-Paar des letzten Bahnabschnitts entnommen und an der Aufnahmestelle lageorientiert abgelegt werden.

Bei der erfindungsgemäßen Vorrichtung sind die Bahnabschnitte mit ihren einander zugewandten Endbereichen um eine ihnen gemeinsame Gelenkstelle zueinander verschwenkbar, so daß ihre relative Ausrichtung zueinander laufend verändert werden kann, um am Ende des letzten Bahnabschnitts die dort ankommenden, vom Abstreifer aus dem Bürstenriemen-Paar dieses Bahnabschnitts abgenommenen Werkstücke an der Aufnahmestelle lageorientiert ablegen zu können. Durch die Veränderung der Relativlage der Bahnabschnitte zueinander über ein Verschwenken an den gemeinsamen Gelenkstellen kann das Ende des letzten Bahnabschnitts an der Aufnahmestelle an zueinander versetzte Abgabestellen gebracht und damit ein Ablegen von lageorientierten Werkstücken vorgenommen werden.

Die Verwendung von endlosen Bürstenriemen-Paaren anstelle von Zahnriemen zur Aufnahme der zu transportierenden Werkstücke hat zunächst den Vorteil, daß in den Bürstenriemen die einzelnen Werkstücke auch mit unterschiedlichen Durchmessern jederzeit unschwer aufgenommen werden können, was bei der Verwendung von Zahnriemen nicht möglich ist, da deren Aufnahmevertiefungen für die Werkstücke bestenfalls in einem nur sehr geringen Ausmaß Durchmesseränderungen der Werkstücke zulassen. Außerdem ist bei der dem ersten Bahnabschnitt zugeordneten Werkstückzuführung eine Abstimmung der Einschiebezeit des Werkstücks in den Bürstenriemen und der Geschwindigkeit des letzteren relativ einfach möglich, während bei einem Zahnriemen diese Abstimmung der Einstellungen ganz erheblich genauer vorgenommen werden müßte.

Die erfindungsgemäße Vorrichtung ist vergleichsweise einfach im Aufbau und stellt sich als eine kostengünstige Alternative zum Einsatz eines Roboters dar. Dabei können kurze Stäbe, z. B. 150 mm bis 250 mm lang, in einem Durchmesserbereich von 3 mm bis 7 mm mit einer hohen Stückleistung von z. B. bis zu 180 Stück pro Minute (oder sogar mehr) befördert werden.

Bei der erfindungsgemäßen Vorrichtung ist es von Vorteil, wenn die Werkstück-Zuführung am ersten Bahnabschnitt mit einem Einstoßer zum Eindrücken der angelieferten Werkstücke in die Bürsten des Bürstenriemen-Paares des ersten Bahnabschnitts versehen ist, wobei, erneut bevorzugt, das Eindrücken der Werkstücke in die Bürsten des Bürstenriemen-Paares des ersten Bahnabschnitts bei laufendem Antriebsmotor erfolgt und eine intermittierende Betätigung desselben nicht erforderlich ist.

Vorteilhafterweise ist am Einlauf des ersten Bahnabschnitts wie auch am Auslauf aller folgenden Bahnabschnitte jeweils ein Niederhalter vorgesehen, mittels dessen die Werkstücke im Bereich der dort jeweiligen Umlenkstelle in der Umlaufbahn gehalten werden.

Eine besonders bevorzugte Ausgestaltung der Erfindung besteht auch darin, daß entlang des geradlinigen Trums aller Bahnabschnitte jedem Bürstenriemen derselben ein Führungsblech zugeordnet ist, welches die zu transportierenden Werkstücke seitlich und an deren Oberseite zumindest teilweise überdeckt und dabei in den Bürsten hält. Auf diese Weise ist mit einfachen Maßnahmen sehr wirkungsvoll die Aufnahme der Werkstücke in den Bürstenriemen jedes Bürstenriemen-Paares gewährleistet.

Es ist weiterhin von Vorteil, wenn bei Verwendung von zwei Bahnabschnitten am Grundgestell der erfindungsgemäßen Vorrichtung eine erste Verstelleinrichtung mit einem ausfahrbaren Verstellglied gestellfest und verschwenkbar angebracht ist, wobei das Verstellglied in einem Abstand von der Gelenkachse der gemeinsamen Gelenkstelle beider Bahnabschnitte am zweiten Bahnabschnitt angelenkt ist. Hierdurch kann ein Verschwenken des zweiten Bahnabschnitts relativ zum ersten Bahnabschnitt über diese Verstelleinrichtung einfach und rasch eingestellt werden.

Dabei ist es von Vorteil, wenn am Grundgestell noch eine weitere Verstelleinrichtung angebracht ist, die mit ihrem einen Ende am Grundgestell gestellfest, aber verschwenkbar befestigt und mit ihrem anderen Ende am Gehäuse der ersten Verstelleinrichtung gelenkig gelagert ist. Damit läßt sich die Winkeleinstellung der ersten Verstelleinrichtung relativ zu ihrer Lagerstelle am Grundgestell ebenfalls rasch und einfach einstellen bzw. verändern.

Als Verstelleinrichtung können alle geeigneten Einrichtungen zum Verstellen eingesetzt werden, wobei jedoch ganz besonders bevorzugt als Verstelleinrichtung Druckzylinder, insbesondere in Form von Druckluftzylindern oder als Elektrozylinder, eingesetzt werden.

Auch Zahnstangenanordnungen, Spindeln, Servoachsen o. ä. können als geeignete Verstelleinrichtungen eingesetzt werden.

Durch die Verwendung der beiden Druckzylinder in Verbindung mit den beiden Drehpunkten, an denen die beiden Bahnabschnitte umgelenkt werden können, läßt sich eine horizontale und eine vertikale Bewegung der am zweiten Bahnabschnitt vorgesehenen Abgabeklappen zur Abgabe der Werkstücke in den Aufnahmekörper erreichen.

Eine weitere bevorzugte Ausgestaltung der erfindungsgemäßen Vorrichtung besteht auch darin, daß im Bereich der gemeinsamen Gelenkstelle jeweils zweier aufeinanderfolgender Bahnabschnitte auf der Oberseite des Bürstenriemen-Paares des folgenden Bahnabschnitts jedem Bürstenriemen ein Federband zugeordnet ist, das an seinen beiden Enden an jeweils eine federvorgespannte Rollenkette angeschlossen ist und dadurch in jeder relativen Verschwenkstellung beider Bahnabschnitte zueinander, die Gelenkstelle umlaufend, in Position gehalten wird. Dadurch wird sichergestellt, daß sowohl im Bereich der Übergabe der Werkstücke von dem einen Bahnabschnitt zum folgenden Bahnabschnitt, wie auch längs desselben nach der Umlenkstelle die Werkstücke wiederum sicher innerhalb des Bürstenriemen-Paares des folgenden Bahnabschnitts gehalten werden.

Es ist weiterhin günstig, wenn bei einer erfindungsgemäßen Vorrichtung zwischen dem Abstreifer und den Abgabeklappen ein trichterförmiger Durchgang zur lageorientierten Einführung der Werkstücke zwischen die Abgabeklappen vorgesehen ist, so daß bei jedem aus dem Bürstenriemen-Paar des letzten Bahnabschnitts durch den Abstreifer abgelösten Werkstück infolge der trichterförmigen Ausgestaltung des Durchgangs zu den Abgabeklappen hin eine lageorientierte und selbsttätig in den Abgabeklappen zentrierte Anordnung stattfindet.

Es ist ferner von Vorteil, wenn die Bürstenriemen des Bürstenriemen-Paares des zweiten Bahnabschnitts voneinander um einen kleineren Abstand entfernt sind als die Bürstenriemen des Bürstenriemen-Paares des ersten Bahnabschnitts, wobei sie mittig zu letzterem ausgerichtet sind, was insgesamt in der Breite der Vorrichtung eine kompakte Ausgestaltung erreichen läßt.

Eine bevorzugte Ausgestaltung der Erfindung besteht auch darin, daß eine zentrale Steuereinrichtung zur Ansteuerung aller Motoren, der Verstelleinrichtungen und der Werkstück-Zuführung, und gegebenenfalls weiterer linearer oder verschwenkender Bewegungen einzelner Elemente der Vorrichtung, vorgesehen ist.

In einer bevorzugten Ausgestaltung der erfindungsgemäßen Vorrichtung umfaßt die gemeinsame Gelenkstelle von erstem und zweitem Bahnabschnitt eine zentrale Drehwelle, auf der Antriebsräder für die Bürstenriemen der Bürstenriemen-Paare beider Bahnabschnitte angebracht sind und die an einen seitlich angeordneten Antriebsmotor angeschlossen ist. Dabei kann jeder geeignete Antriebsmotor eingesetzt werden. Auf diese Weise wird durch den Antrieb der Bürstenriemen-Paare an dieser gemeinsamen Gelenkstelle sichergestellt, daß die Werkstücke auch über die Gelenkstelle hinweg synchron weiterbewegt werden.

Es ist weiterhin bevorzugt, wenn bei der erfindungsgemäßen Vorrichtung eine Einrichtung vorgesehen ist, die dazu eingerichtet ist, den Abstand zwischen den Bürstenriemen der Bürstenriemen-Paare am ersten Bahnabschnitt verstellen zu können, wobei, erneut bevorzugt, ein Handrad zur Verstellung dieses Abstandes eingesetzt wird. Wenn durch diese Einrichtung der Abstand zwischen dem Bürstenriemen-Paar des ersten Bahnabschnitts verstellt wird, bedeutet dies, daß gleichzeitig auch eine entsprechende Verstellung in der gemeinsamen Gelenkstelle auftritt, an der sich aber auch eine Umlenkstelle des Bürstenriemen-Paares des zweiten Bahnabschnitts befindet, so daß dort dem veränderten Abstand zwischen den Bürstenriemen des Bürstenriemen-Paares des ersten Bahnabschnitts auch gleichzeitig eine Veränderung des Abstandes zwischen den Bürstenriemen des Bürstenriemen-Paares des zweiten Bahnabschnitts zugeordnet ist. Wenn also durch die Einrichtung eine Veränderung des Abstands der Bürstenriemen des Bürstenriemen-Paares des ersten Bahnabschnitts vorgenommen wird, findet gleichzeitig eine geeignete Veränderung des Abstands zwischen den Bürstenriemen des Bürstenriemen-Paares des zweiten Bahnabschnitts statt.

Die erfindungsgemäße Vorrichtung gestattet es, über eine Transportstrecke mit mehreren Bahnabschnitten hinweg kurze Werkstücke zu transportieren und diese an einer Aufnahmestelle, z. B. in einem Aufnahmebehälter oder einem Gestell, lageorientiert abzulegen, wobei die Ablegestelle vertikal und horizontal gezielt gewählt werden kann. Soll dabei nicht nur ein Stapeln der Werkstücke in vertikaler Richtung erfolgen, besteht die Möglichkeit, die Aufnahmestelle ihrerseits seitlich zu verfahren, so daß nebeneinander liegende Werkstückstapel an ihr abgelegt werden können.

Die erfindungsgemäße Vorrichtung kann mit zwei, drei oder sogar mehr Bahnabschnitten ausgeführt werden, wobei jedoch vorzugsweise zwei oder auch drei Bahnabschnitte gewählt werden.

Zur Bewegung der Bahnabschnitte kann vorzugsweise auch ein Portal vorgesehen werden, an dem eine Druckzylindereinheit angebracht ist, die mit ihrem einen Ende verfahrbar am Portal montiert und mit ihrem anderen Ende am letzten Bahnabschnitt angelenkt ist, vorzugsweise am letzten Bahnabschnitt nahe der Auswerfereinheit.

Bevorzugt ist ferner, daß der Werkstückzuführung eine Drahtricht- und Abschneidemaschine zur Zuführung der länglichen Werkstücke vorgeschaltet ist.

Es ist weiterhin vorteilhaft, wenn ein Bahnabschnitt oder mehrere Bahnabschnitte mit Kühleinheiten versehen sind, die vorzugsweise als integrierte Lüfter ausgebildet sind. Damit können die Werkstücke, die nach dem Richten und Trennen eine relativ hohe Temperatur (von bis zu 200° C) haben, beim Durchlaufen dieser Bahnabschnitte abgekühlt und dadurch die betreffenden Bahnabschnitte als Kühlstrecken eingesetzt werden.

Die Erfindung wird nachfolgend anhand der Zeichnungen im Prinzip beispielshalber noch näher erläutert. Es zeigen:
- Fig. 1: eine perspektivische Darstellung einer Drahtricht- und Abschneidemaschine mit einer zugeordneten erfindungsgemäßen Transportvorrichtung mit zwei Bahnabschnitten;
- Fig. 2: eine Ansicht (in Fig. 1: von der rechten Figurenseite her) der erfindungsgemäßen Transportvorrichtung aus Fig. 1;
- Fig. 3: eine perspektivische Schrägdarstellung der erfindungsgemäßen Transportvorrichtung aus Fig. 1;
- Fig. 4: eine Ansicht der erfindungsgemäßen Vorrichtung aus Fig. 2 mit ausgefahrenen Druckzylindern;
- Fig. 5: eine Ansicht wie Fig. 4, jedoch mit eingefahrenem ersten Druckzylinder und ausgefahrenem zweiten Druckzylinder;
- Fig. 6: eine Ansicht wie Fig. 4, jedoch mit ausgefahrenem ersten Druckzylinder und eingefahrenem zweiten Druckzylinder;
- Fig. 7: eine Darstellung wie Fig. 6, in welcher jedoch der erste Druckzylinder eingefahren ist;
- Fig. 8: eine vergrößerte Detaildarstellung der Anordnung der Werkstückzuführung vor Durchführung des Werkstück-Einstoßvorganges am ersten Bahnabschnitt;
- Fig. 9: eine Darstellung entsprechend Fig. 8, nach erfolgtem Werkstück-Einstoßvorgang;
- Fig. 10: eine prinzipielle Schnittdarstellung durch die gemeinsame Gelenkstelle von erstem und zweitem Bahnabschnitt;
- Fig. 11: eine vergrößerte Detaildarstellung der Auswerfereinheit am letzten Bahnabschnitt;
- Fig. 12: eine (nur prinzipielle) perspektivische Darstellung einer Einrichtung zur Verstellung des Abstands zwischen den Bürstenriemen der Bürstenriemen-Paare am ersten Bahnabschnitt;
- Fig. 13: eine Seitenansicht einer erfindungsgemäßen Transportvorrichtung mit zwei Bahnabschnitten und einem an einem Portal geführten Druckzylinder, der am zweiten Bahnabschnitt nahe der Auswerfereinheit angelenkt ist;
- Fig. 14: eine Seitenansicht einer erfindungsgemäßen Transportvorrichtung mit drei Bahnabschnitten, einem Aufnahmebehälter und Kühleinheiten.

In den folgenden Figuren sind Ausführungsbeispiele erfindungsgemäßer Vorrichtungen gezeigt, die einer Drahtrichtmaschine mit einer Schneidestation zugeordnet sind, wobei in allen Figuren gleiche Teile mit gleichen Bezugszeichen versehen sind.

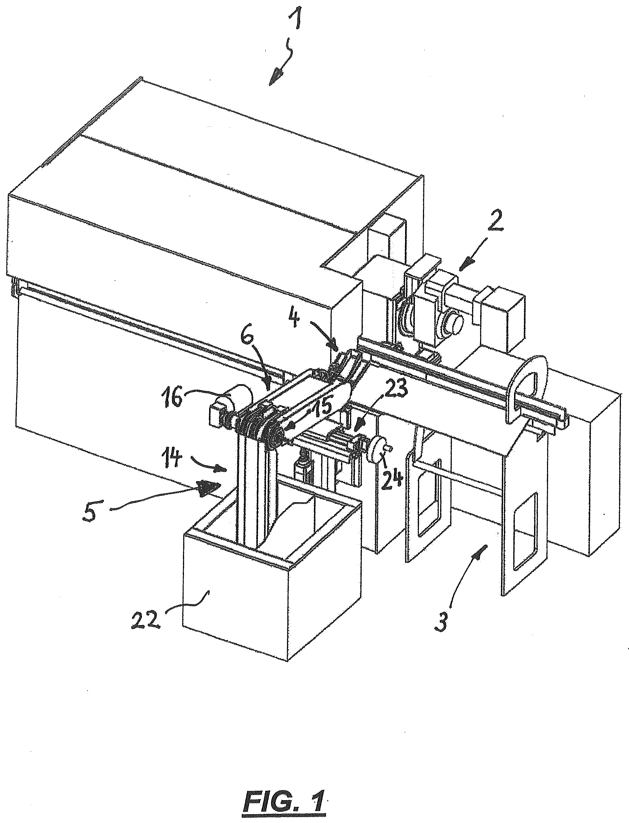

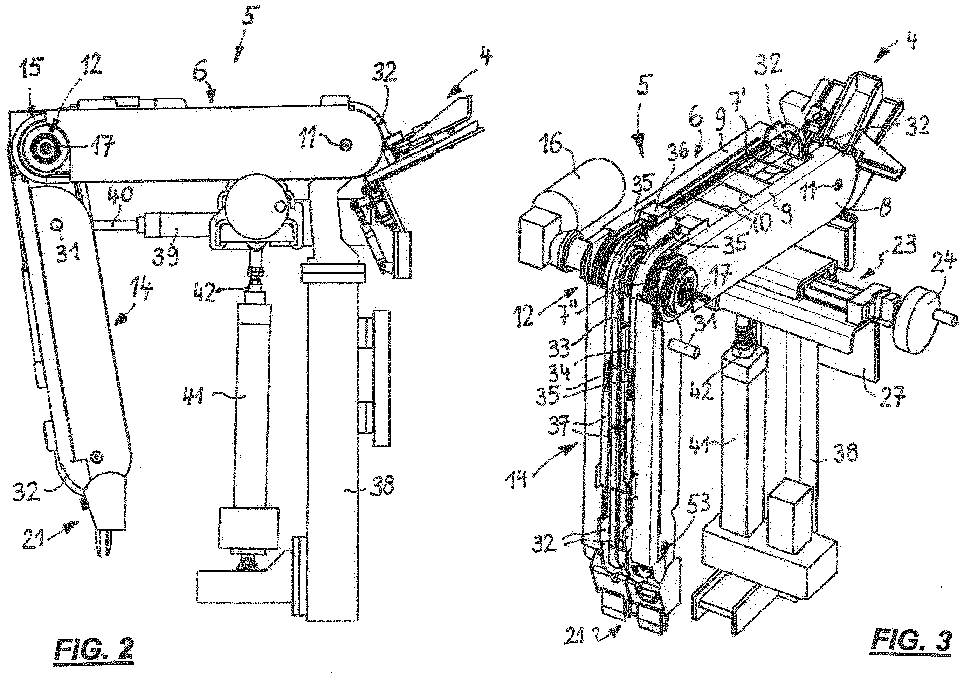

Fig. 1 zeigt in perspektivischer Schrägansicht eine Drahtrichtmaschine 1, die an ihrer Vorderseite mit einer Schneidestation 2 versehen ist. Dieser Drahtrichtmaschine 1 wird Draht von einem Coil (nicht dargestellt) zugeführt, in ihr gerichtet und sodann in der Schneidestation 2 in kurze, längliche Werkstücke 10 (vgl. Fig. 3) in Form von Stäben oder Rohrstücken mit einer Länge von z. B. 150 mm bis 250 mm in einem Durchmesserbereich von 3 mm bis 7 mm abgeschnitten.

Der Anordnung ist ein Anbau 3 zugeordnet, der die von der Drahtrichtmaschine 1 und der Schneidestation 2 gelieferten abgeschnittenen und gerichteten Stäbe aufnimmt und von dem aus diese in eine Werkstückzuführung 4 einer erfindungsgemäßen Transportvorrichtung 5 einrutschen, die mit zwei Bahnabschnitten 6 und 14 versehen ist.

In der Werkstückzuführung 4 werden die eingelaufenen Werkstücke mittels eines Einstoßers, auf den noch weiter unten einzugehen sein wird, in die Bürsten eines umlaufenden Endlos-Bürstenriemen-Paares 7 (vgl. Fig. 3) eingeschoben, das einem ersten Bahnabschnitt 6 der Transportvorrichtung 5 zugeordnet ist und über zwei Umlenkstellen 11 und 12 an dessen Enden umläuft (vgl. Fig. 3), zwischen denen es entlang eines geradlinigen Trums des Bahnabschnitts 6 bewegt wird.

In der Darstellung der Fig. 3 ist von dem Bürstenriemen-Paar 7 dieses ersten Bahnabschnitts 6 nur ein Bürstenriemen 7' gezeigt, während auf der gegenüberliegenden Seite des ersten Bahnabschnitts 6 der dort umlaufende Bürstenriemen 7" durch eine Abdeckung 8 verdeckt ist, die ihn nach außen hin wie auch an ihrer Ober- und Unterseite umlaufend mittels eines schmalen Abdeckstreifens 9 überdeckt, der gerade so breit ist, daß er den darunter laufenden Bürstenriemen 7" in seiner Breite abdeckt.

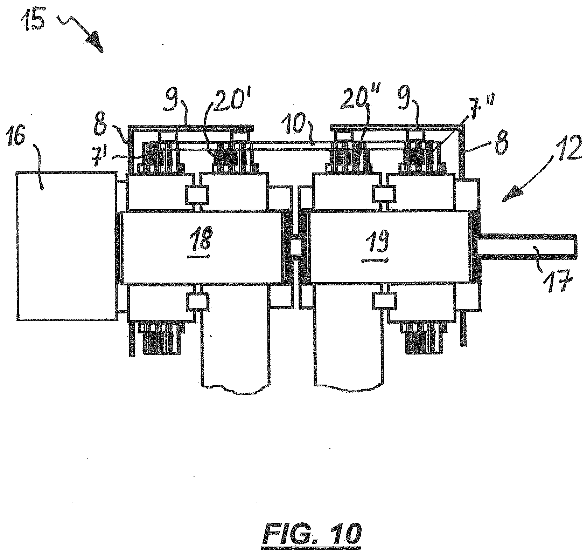

Dem ersten Bahnabschnitt 6 ist ein zweiter Bahnabschnitt 14 nachgeschaltet, wobei beide Bahnabschnitte 6 und 14 an ihren einander zugewandten Endbereichen über eine gemeinsame Gelenkstelle 15 verschwenkbar miteinander verbunden sind, von der aus auch der zweite Bahnabschnitt 14 längs eines geradlinigen Trums zu einer weiteren Umlenkstelle 53 weiterläuft. Eine nur ganz prinzipielle Schnittansicht durch diese gemeinsame Gelenkstelle 15 zeigt Fig. 10, wobei die Schnittlage in einer zur Längsachse des ersten Bahnabschnitts 6 senkrechten Schnittebene gewählt ist.

Ein Antriebsmotor 16 treibt eine Antriebswelle 17 an. Auf dieser sind, axial nebeneinander, zwei im Durchmesser radial vergrößerte und jeweils zylindrisch geformte Aufnahmeabsätze 18 und 19 angebracht, die beide vom Antriebsmotor 16 über die Antriebswelle 17 angetrieben werden.

Dabei sitzt der Aufnahmeabsatz 18 fest auf der Antriebswelle 17, während der Aufnahmeabsatz 19 axial auf der Antriebswelle 17 verschoben werden kann, dabei aber stets mit dieser in Drehrichtung in Formschluß steht, so daß auch bei einem axialen Verschieben stets der Antrieb durch den Antriebsmotor 16 an dem Aufnahmeabsatz 19 weiterhin wirksam bleibt.

Aus der Darstellung der Fig. 10 ist die Lage der beiden Bürstenriemen-Paare 7 (zugeordnet dem Bahnabschnitt 6) sowie 20 (zugeordnet dem zweiten Bahnabschnitt 14) gut ersichtlich, wobei das Bürstenriemen-Paar 7 aus den zwei endlos umlaufenden Bürstenriemen 7' sowie 7" und das Bürstenriemen-Paar 20 aus den beiden endlos umlaufenden Bürstenriemen 20' sowie 20" gebildet wird.

Wie Fig. 10 zeigt, sitzen die Bürstenriemen 7' und 7" des Bürstenriemen-Paares 7 des ersten Bahnabschnitts 6 axial außen auf der Antriebswelle 17, während die Bürstenriemen 20' und 20" des zweiten Bürstenriemen-Paares 20, welches dem zweiten Bahnabschnitt 14 zugeordnet ist, zwischen den beiden Bürstenriemen 7' und 7", mittig zu diesen, angebracht sind.

Die perspektivische Darstellung der Fig. 3 zeigt, wie einzelne Werkstücke 10 vom Bürstenriemen-Paar 7 des ersten Bahnabschnitts 6 (in Fig. 3 ist hiervon nur der eine Bürstenriemen 7' erkennbar), von der Werkstückzuführung 4 her kommend, in Richtung auf die am anderen Ende des ersten Bahnabschnitts 6 zu der dortigen Umlenkstelle 12, die gleichzeitig auch die den Bahnabschnitten 6 und 14 gemeinsame Gelenkstelle 15 darstellt, transportiert werden. Die Werkstücke 10 sind dabei an ihren jeweils seitlichen Endbereichen in den Bürsten der Bürstenriemen 7' und 7" (letzterer von der Abdeckung 8 verdeckt) des ersten Bürstenriemen-Paares 7 gehaltert und werden durch die synchrone Vorwärtsbewegung dieser Bürstenriemen zu der Umlenkstelle 12 geführt. Sobald die Werkstücke 10 an der Umlenkstelle 12 bzw. der gemeinsamen Gelenkstelle 15 angekommen sind, laufen sie dort, zunächst noch von den Bürstenriemen 7' und 7" des ersten Bürstenriemen-Paares 7 mitgenommen, bis zu deren Richtungsumlenkung, wobei sie dort von den beiden Bürstenriemen 20' und 20" des zweiten Bürstenriemen-Paares 20 im Bereich zwischen den beiden Bürstenriemen 7' und 7" des ersten Bürstenriemen-Paares 7 erfaßt und auch von diesen zunächst noch zusätzlich zu denen des ersten Bürstenriemen-Paares 7 bewegt werden. Nach einer kurzen Bewegungsstrecke schwenken jedoch die Bürstenriemen 7' und 7" des ersten Bürstenriemen-Paares 7 an der Umlenkstelle 12 nach unten und dann in Gegenrichtung zurück, während die Werkstücke 10 von den beiden Bürstenriemen 20' und 20" des zweiten Bürstenriemen-Paares 20 von dort weiter in Längsrichtung des zweiten Bahnabschnittes 14 transportiert werden. Infolge der Nachgiebigkeit der Bürsten der Bürstenriemen-Paare ist der zusätzliche Einlauf der Werkstücke 10 an der Gelenkstelle 12 in die dort ebenfalls umgelenkten Bürstenriemen des zweiten Bürstenriemen-Paares 20, bei zunächst gleichzeitig weiterem Transport durch die Riemen des ersten Bürstenriemen-Paares 7, ohne irgendein Problem möglich, genauso wie der Auslauf aus den Bürstenriemen des ersten Bürstenriemen-Paares 7, nachdem dieses an der Umlenkstelle in Gegenrichtung umgelenkt wird, und dann der weitere Transport durch die Bürstenriemen des zweiten Bürstenriemen-Paares 20 bis zu der dem zweiten Bahnabschnitt 14 nachgeschalteten Auswerfereinheit 21, von der die dort ankommenden Werkstücke 10 an einer Aufnahmestelle in Form eines Aufnahmebehälters 22 (vgl. Fig. 1) abgelegt werden, erfolgt.

Wie die Fig. 3 sowie 10 im einzelnen erkennen lassen, sind die Bürstenriemen 7' und 7" des ersten Bürstenriemen-Paares 7 sowie die Bürstenriemen 20' und 20" des zweiten Bürstenriemen-Paares 20 jeweils als endlos umlaufende, parallel zueinander verlaufende Transportriemen ausgeführt, die auf ihrer Oberseite jeweils mit mehreren Reihen von nebeneinander angebrachten Bürstenelementen besetzt sind.

Aus der Darstellung der Fig. 10 ist erkennbar, wie ein stabförmiges Werkstück 10 an der Umlenkstelle 12 der gemeinsamen Gelenkstelle 15 an seinen äußeren Endbereichen von den Bürstenriemen 7' sowie 7" des ersten Bürstenriemen-Paares 7 noch erfaßt ist und bis dorthin von diesen transportiert wurde bis zu der Stelle, wo die Bürstenriemen 20' sowie 20" des zweiten Bürstenriemen-Paares 20, das dort ebenfalls, aber in einer dem ersten Bahnabschnitt 6 nachgeschalteten Transportrichtung des zweiten Bahnabschnittes 14, an der Umlenkstelle 12 umläuft, wobei es axial zwischen den beiden äußeren Bürstenriemen 7' und 7" des ersten Bürstenriemen-Paares 7 angeordnet ist.

Das von dem ersten Bürstenriemen-Paar 7 angeförderte Werkstück 10 läuft im Bereich zwischen den Bürstenriemen 7' und 7" in die dort umlaufenden Bürsten der Bürstenriemen 20' und 20" des zweiten Bürstenriemen-Paares 20 ein und wird von diesen erfaßt, wobei an der Umlenkstelle 12 die Bürstenriemen des ersten Bürstenriemen-Paares 7 und die des zweiten Bürstenriemen-Paares 20 synchron von dem Antriebsmotor 16 angetrieben umlaufen. Wenn dann bei ihrer weiteren Umdrehung die Bürstenriemen 7' und 7" in die Gegenrichtung umschwenken und zu der Werkstückzuführung 4 zurücklaufen, werden die axialen Endbereiche des Werkstücks 10 von den Bürsten des ersten Bürstenriemen-Paares 7 freigegeben und ab dann nur noch von den Bürstenriemen 20' und 20" weiter transportiert, in Längsrichtung des zweiten Bahnabschnitts 14 bis hin zur Auswerfereinheit 21.

Die Transportvorrichtung 5 ist ferner mit einer Einrichtung 23 zum Verstellen des Abstandes der Bürstenriemen 7' und 20' von den Bürstenriemen 7" und 20" versehen, um die Transportvorrichtung 5 auf unterschiedliche Längen der Werkstücke 10 einstellen zu können. Dabei bleibt der axiale Abstand zwischen dem Bürstenriemen 7' des ersten Bürstenriemen-Paares 7 und dem Bürstenriemen 20' des zweiten Bürstenriemen-Paares 20 ebenso wie der axiale Abstand zwischen dem Bürstenriemen 7" und dem Bürstenriemen 20" ungeändert, es wird durch die Einrichtung 23 also grundsätzlich nur der Abstand jeweils zwischen den beiden genannten Bürstenriemen 7' und 20' einerseits sowie 7" und 20" andererseits geändert.

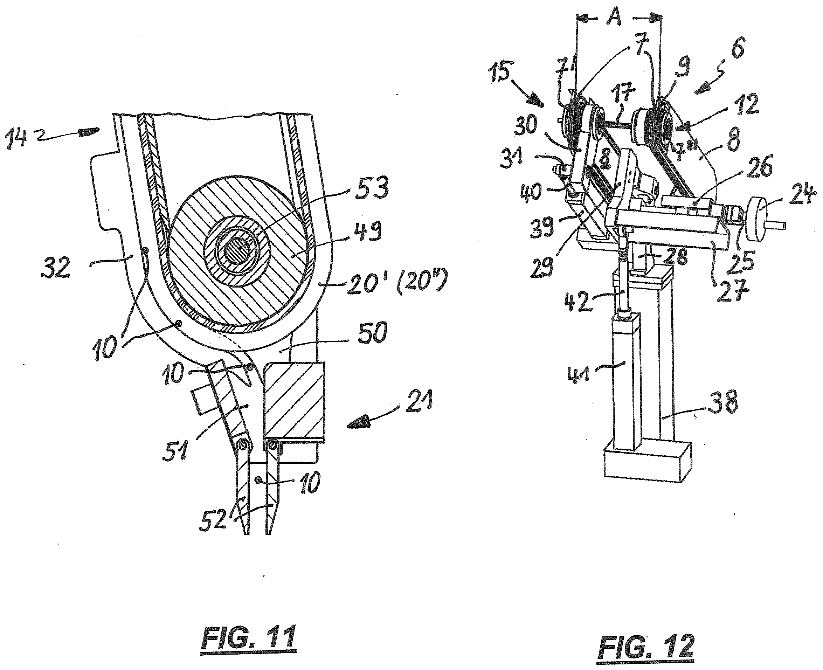

In Fig. 12 ist in einer nur prinzipiellen Darstellung die Anordnung der Einrichtung 23 in ihrer Zuordnung zum ersten Bahnabschnitt 6, in dessen Bereich sie angebracht ist, gezeigt (dabei sind nur konstruktive Elemente, die das Verständnis fördern, ganz prinzipiell angegeben, wobei im Falle einer Mehrfachanordnung solcher konstruktiven Elemente jeweils nur eines gezeigt und die anderen der Übersichtlichkeit halber weggelassen sind).

Wie Fig. 12 zeigt, umfaßt die Einrichtung 23 zunächst ein Handrad 24 zu ihrer Betätigung durch die Bedienungsperson. Das Handrad 24 ist mit einer Drehwelle 25 verbunden, die eine durch die Verdrehung des Handrades 24 in Längsrichtung der Drehwelle 25 verschieblich angebrachte Konsole 26 trägt, die an ihrer Oberseite ihrerseits in geeigneter Weise fest mit der, in Transportrichtung der Werkstücke 10 gesehen, linken (ersten) Abdeckung 8 des ersten Bahnabschnittes 6 verbunden ist. Wird durch Verdrehen des Handrades 24 die Konsole 26 in Längsrichtung der Drehwelle 25 verschoben, wird dabei auch diese erste Abdeckung 8, welche den innerhalb derselben laufenden Bürstenriemen 7" abdeckt, entsprechend axial mitverschoben.

Dadurch wird der Abstand ***A***, um den die beiden Bürstenriemen 7' und 7" des ersten Bürstenriemen-Paares 7 voneinander entfernt sind, in entsprechender Weise verändert.

Das Handrad 24, die Drehwelle 25 und die verschiebliche Konsole 26 sowie die zugehörigen weiteren Elemente, die die Halterung und Verschiebung der Konsole 26 ermöglichen, sitzen auf einer Lagerkonsole 27, die ihrerseits auf einem Lagerbock 28 befestigt ist, welcher seinerseits eine Abstützung gegenüber einem Grundgestell 38 darstellt.

An dem dem Handrad 24 gegenüberliegenden Ende der Lagerkonsole 27 ist, senkrecht zu dieser aufragend, ein Fixierflansch 29 angebracht, der mit der zweiten Abdeckung 8 im Bereich des ersten Bahnabschnitts 6 in geeigneter Weise starr befestigt ist, etwa durch Schrauben. Damit wird erreicht, daß bei einer Verdrehung des Handrads 24 nur die eine (in Transportrichtung der Werkstücke gesehen: linke) Abdeckung 8 mit dem in dieser laufenden Bürstenriemen 7" in Richtung der Drehwelle 25 verschoben werden kann, die gegenüberliegende andere Abdekkung 8 mit dem dort angebrachten Bürstenriemen 7' jedoch durch ihre Befestigung an dem Fixierflansch 29 keine solche lineare Längsbewegung erfährt.

Dies bedeutet, daß bei einer Verstellung des Abstandes ***A*** zwischen den Bürstenriemen 7' und 7" des ersten Bürstenriemen-Paares 7 im Bereich des ersten Bahnabschnitts 6 in Folge der axialen Relativbewegung der Aufnahmeabsätze 18 und 19 zueinander gleichzeitig auch an der Umlenkstelle 12 der gemeinsamen Gelenkstelle 15 die auf der dort vorhandenen Antriebswelle 17 noch umlaufend angebrachten Bürstenriemen 20' und 20" des zweiten Bürstenriemen-Paares 20 ebenfalls in ihrem Abstand zueinander entsprechend der Veränderung des Abstands ***A*** mitverändert werden, was in Fig. 12 nur ganz prinzipiell dargestellt ist, wobei die dort umlaufenden Bürstenriemen 20' und 20" nicht im einzelnen gezeigt sind.

In Fig. 12 ist, nur ganz prinzipiell und nur auf der linken Seite der Darstellung, angedeutet, daß von der Stelle axial neben dem Bürstenriemen 7', an welcher der Bürstenriemen 20' auf der Antriebswelle 17 umläuft und einen seitlichen Arm 30 bildet, innerhalb dessen der Bürstenriemen 20' verläuft und der sich entlang des zweiten Abschnitts 14 erstreckt (wobei ein gleicher seitlicher Arm auch von dem zweiten, auf der Antriebswelle 17 sitzenden Bürstenriemen 20" ausgeht, in Fig. 12 aber nicht dargestellt ist), mit einem gewissen Abstand zu der Antriebswelle 17 der gemeinsamen Gelenkstelle 15 ein Führungsbolzen 31 angebracht ist, der parallel zu der Antriebswelle 17 verläuft und sich durch beide seitlichen Arme 30 des zweiten Bahnabschnitts 14 hindurch erstreckt. In dem in Fig. 12 nicht gezeigten, dem dort dargestellten seitlichen Arm 30 gegenüberliegenden seitlichen Arm des zweiten Bahnabschnitts 14 ist eine Aufnahmebohrung angebracht, durch welche der Führungsbolzen 31 verschieblich hindurchragt, so daß bei einer Verstellung des Abstands ***A*** durch das Handrad 24 auch im zweiten Bahnabschnitt 14 dessen seitliche Arme 30 bei der Verschiebebewegung des einen derselben über den Führungsbolzen 31 geführt werden, so daß insgesamt bei einer seitlichen Verschiebung der "*linken Hälfte*" der Transportvorrichtung 5 sowohl eine Führung in Verschieberichtung am ersten Bahnabschnitt 6, wie auch am zweiten Bahnabschnitt 14 gegeben ist.

Die Einrichtung 23 ist so ausgebildet, daß nach einer erfolgten Einstellung des Abstandes ***A*** eine Lageblockierung der verschieblichen Konsole 26, etwa durch eine geeignete Klemmeinrichtung (in der Zeichnung nicht dargestellt), vorgenommen wird, um den eingestellten Abstand ***A*** für den Betrieb der Transportvorrichtung 5 ungeändert beizubehalten, bis eine neue Einstellung erforderlich wird.

Beim Einlauf der Werkstücke 10 aus der Werkstückzuführung 4 am Anfang des ersten Bahnabschnitts 6 sowie beim Auslauf am Ende weiterer eventuell noch vorgesehener Bahnabschnitte ist im Bereich der jeweiligen Umlenkstelle 11 bzw. 53 an dieser jeweils ein Niederhalter 32 angebracht, der dazu dient, dafür zu sorgen, daß das jeweilige Werkstück 10 beim Umlauf um die betreffende Umlaufstelle 11 bzw. 53 jeweils innerhalb der gewünschten Umlaufbahn bleibt.

Wie Fig. 3 zeigt, ist an der Umlenkstelle 12 der gemeinsamen Gelenkstelle 15, jedem der Bürstenriemen 20' bzw. 20" des zweiten Bürstenriemen-Paares 20 zugeordnet, ein jeweils bewegliches Federband 33 bzw. 34 angebracht, das sich radial außen um die umlaufenden Bürstenriemen 20' und 20" herum anlegt und verhindert, daß die transportierten Werkstücke 10 aus der Umlaufbahn herauslaufen könnten. Die Federbänder 33 und 34 werden an ihren beiden Enden jeweils an ein federndes Element angeschlossen: Sie werden beim gezeigten Ausführungsbeispiel an jedem ihrer Enden an einer Rollenkette 35 befestigt und über diese an einen elastischen Befestigungsblock 36 am zweiten Bahnabschnitt 6 fest montiert.

Am anderen Endbereich werden die Federbänder 33, 34 ebenfalls über jeweils eine Rollenkette 35 an einem Federelement 37 befestigt, so daß die Federbänder 33, 34 stets unter einer Federvorspannung stehen, welche das jeweilige Federband 33 bzw. 34 auf Position hält und im Prinzip damit dem betreffenden Federband die gleiche Funktion wie die des Niederhalters 32 am Einlauf des ersten Bahnabschnitts 6 bzw. am Auslauf des zweiten Bahnabschnitts 14 verleiht.

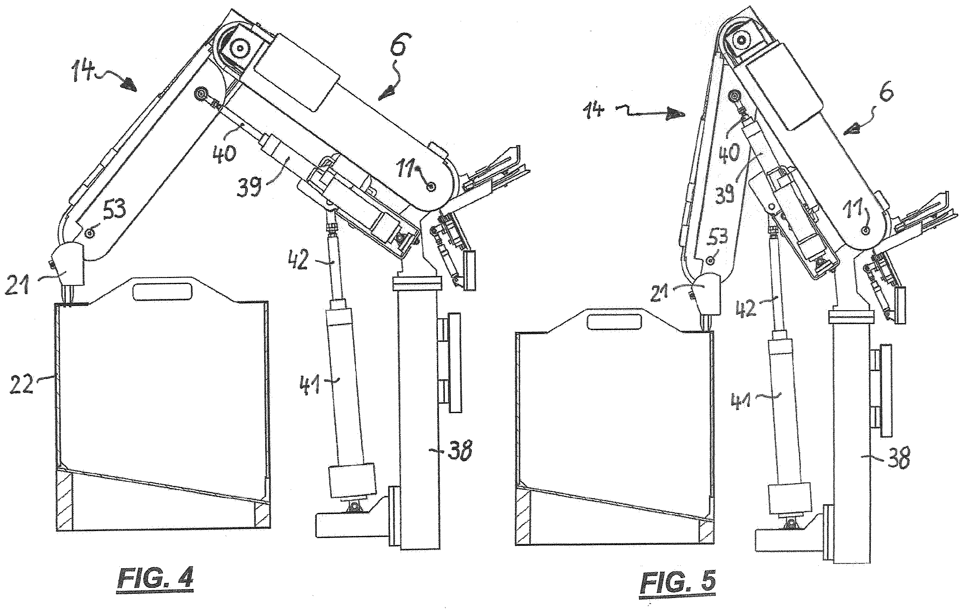

Am Grundgestell 38 der Transportvorrichtung 5 ist ein im wesentlichen parallel zur Längsrichtung des ersten Bahnabschnitts 6 ausgerichteter erster Druckzylinder 39, bevorzugt in Form eines Elektrozylinders, angebracht, dessen ausfahrbare Kolbenstange 40 in einem Abstand von der Drehachse der gemeinsamen Gelenkstelle 15 beider Bahnabschnitte 6 und 14 am zweiten Bahnabschnitt 14 angelenkt ist, wie dies aus den Figuren 4 bis 7 sowie der Darstellung der Fig. 12 entnehmbar ist. Wie letztere zeigt, kann die Anlenkstelle dabei bevorzugt am Führungsbolzen 31 vorgesehen sein.

Aus den Figuren 2, 4 bis 7 sowie 12 ist weiterhin entnehmbar, daß am Grundgestell 38 auch noch ein weiterer, zweiter Druckzylinder 41 angebracht ist, der mit seinem einen Ende am Grundgestell 38 gestellfest, aber verschwenkbar befestigt und mit seinem anderen Ende mit seiner ausfahrbaren Kolbenstange 42 am Gehäuse des ersten Druckzylinders 39 gelenkig gelagert ist. Damit ist die Möglichkeit gegeben, durch entsprechende Betätigung der Druckzylinder 39 und 41 unterschiedliche Ausrichtungen der Bahnabschnitte 6 und 14 relativ zueinander einzustellen, wie dies die Figuren 4, 5, 6 und 7 im einzelnen zeigen. In Fig. 4 ist eine Stellung gezeigt, bei der die Auswerfereinheit 21 an der Oberseite des Aufnahmebehälters 22 in eine bis an dessen vorderen Endbereich ragende Stellung gebracht ist.

Bei der Darstellung der Fig. 5 ist demgegenüber eine Einstellung gezeigt, bei welcher, im Gegensatz zur Fig. 4, die Auswerfereinheit 21 weiterhin oben am Aufnahmebehälter 22, jedoch an dessen zur Stellung der Fig. 4 gegenüberliegenden Seite des Aufnahmebehälters 22 versetzt, angeordnet ist.

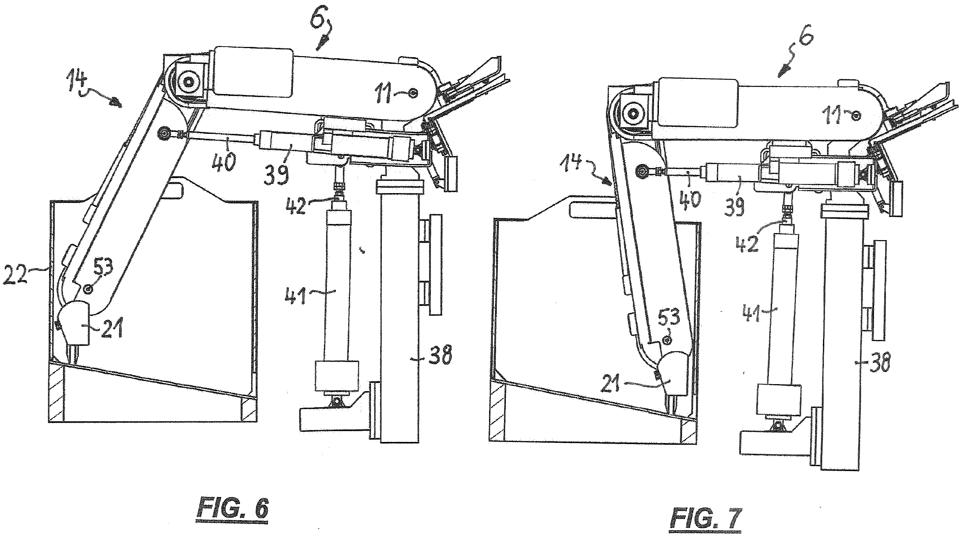

Bei der Einstellung, welche Fig. 6 zeigt, ist die Auswerfereinheit 21 bis auf den Boden des Aufnahmebehälters 22 abgesenkt und zwar dort bis auf eine vom Grundgestell 38 weg ausgefahrene Endstellung, wie sie Fig. 6 zeigt.

In Fig. 7 ist die Auswerfereinheit 21 ebenfalls bis zum Boden des Aufnahmebehälters 22 abgesenkt, jedoch in eine Position verbracht ist, die der Position aus Fig. 6 gegenüberliegt, d. h. am unteren Ende des Aufnahmebehälters 22 liegt.

Die Stellungen der Druckzylinder an den unterschiedlichen Positionen der Auswerfereinheit 21 an der Aufnahmestelle, dem Aufnahmebehälter 22, hängen davon ab, was entsprechend in der zentralen Steuerung hinterlegt ist.

Wie die Figuren 4 bis 7 zeigen, ist es mit der Transportvorrichtung 5 möglich, die transportierten Werkstücke 10 in dem Aufnahmebehälter 22 so abzulegen, daß sie im Rahmen einer übereinanderliegenden Schicht den gesamten Querschnitt des Innenraums des Aufnahmebehälters 22 ausfüllen können. Sollte daneben aber auch noch gewünscht werden, daß nicht nur eine Höhenschicht, sondern zusätzlich auch noch danebenliegende weitere Höhenschichten solcher Werkstücke 10 in den Behälter 22 abgelegt werden, dann besteht die Möglichkeit, den Aufnahmebehälter 22 seinerseits so auszugestalten, daß er seitlich, also senkrecht zu der von den Bewegungen der Bahnabschnitte 6 und 14 überstrichenen Ebene, verfahrbar ist und dadurch eine entsprechende Ablage auch nebeneinanderliegender, übereinander angeordneter Werkstücke 10 erfolgen kann.

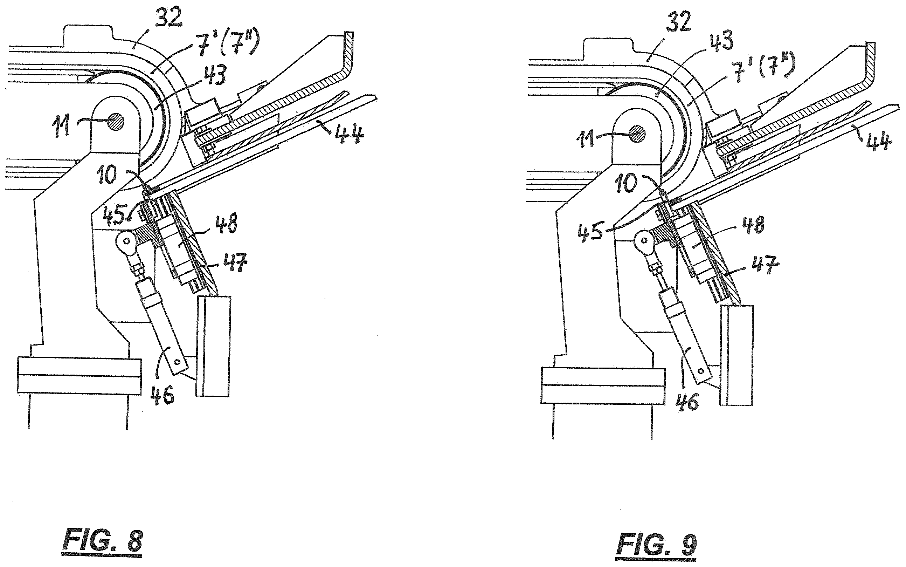

Die Fig. 8 und 9 zeigen nun jeweils in einem vergrößerten Detailausschnitt eine konstruktive Ausgestaltung der Werkstückzuführung 4 beim Einlauf der Werkstücke 10 in den ersten Bahnabschnitt 6. Dabei stellt Fig. 8 den Zustand dar, wenn mehrere Werkstücke in die Werkstückzuführung 4 eingetreten sind, und Fig. 9 zeigt den Zustand, nachdem das vorderste Werkstück 10 in die in der Figur nur mit einem weißen Querschnitt dargestellten Bürstenriemen 7' bzw. 7" eingeschoben ist.

Die Anordnung der Werkstückzuführung 4 umfaßt zunächst eine um die Umlenkstelle 11 herumlaufende Umlenkrolle 43, auf der ein Bürstenriemen 7' bzw. 7" um die Umlenkstelle 11 herumläuft.

In der Anordnung ist weiterhin eine Führungsschiene 44 vorgesehen, auf der die von der Schneidestation 2 kommenden Werkstücke 10 in die Werkstückzuführung 4 bis zum Ende der Führungsschiene 44 einlaufen.

Unterhalb dieser Endposition für die Werkstücke 10 ist ein Einstoßer 45 angeordnet, der in einem Gehäuse 47 läuft und in diesem mittels einer Linearführung 48 über einen pneumatischen Druckzylinder 46 in Richtung auf die Umlenkrolle 43 hin verschoben werden kann.

Fig. 8 zeigt hierzu die Ausgangsstellung, in welcher mehrere Werkstücke 10 hintereinander bereits in der Führungsschiene 44 an deren unterem Ende anliegen.

Fig. 9 zeigt hingegen den Zustand, bei dem der Einstoßer 45 durch die Linearführung 48 aus dem Gehäuse 47 herausbewegt ist, wobei er (wie dies in den Figuren nur ganz prinzipiell angedeutet ist) dabei das erste anliegende Werkstück 10 in die Bürsten der Bürstenriemen 7' und 7" hineinführt. Er wird anschließend sogleich wieder in das Gehäuse 47 zurückgezogen, wobei während des Einschiebevorgangs der Antrieb der Bürstenriemen 7' sowie 7" nicht unterbrochen wird. Dies ist bei Bürstenriemen möglich, da die Bürsten eine entsprechende Nachgiebigkeit beim Einschieben aufweisen und überdies sich das Timing von Einstoßzeit und Geschwindigkeit des betreffenden Bürstenriemens relativ einfach aufeinander abstimmbar sind. Würden Zahnriemen eingesetzt, müßte eine solche Abstimmung wesentlich genauer vorgenommen werden, was erheblich aufwendiger ist. In den Figuren 8 und 9 ist auch die Anordnung des Niederhalters 32 an der Umlenkstelle 11 im einzelnen gezeigt.

Schließlich zeigt Fig. 11 noch eine vergrößerte Detaildarstellung zur Anordnung der Auswerfereinheit 21 am freien Ende des letzten Bahnabschnitts, also des zweiten Bahnabschnitts 14 bei der Transportvorrichtung mit zwei Bahnabschnitten 6 und 14, wie sie in den Fig. 1 bis 7 gezeigt ist.

Auch bei der Darstellung der Fig. 11 ist der Bürstenriemen 20' bzw. 20", in dessen Bürsten die Werkstücke 10 aufgenommen sind, nur mit einer durchgehend weißen Durchmessergestaltung dargestellt.

Wie aus Fig. 11 ersichtlich, werden die von den Bürstenriemen 20' und 20" angeförderten Werkstücke 10 zunächst in eine Umlenkung um die Umlenkstelle 12 eingeführt, wobei sie von einem außen an den Bürsten der Bürstenriemen 20' und 20" anliegenden Niederhalter 32 in der Umlaufbahn gehalten werden.

In der Auswerfereinheit 21 ist ein Abstreifer 50 ausgebildet, der eine Herausführung der Werkstücke 10 aus den Bürsten des Bürstenriemens 20' sowie 20" bewirkt, wobei die dem Werkstück 10 zugewandte Fläche des Abstreifers 50 in Verbindung mit dem Endbereich des Niederhalters 32 einen Ausleitkanal bildet, durch den das aus den Bürstenriemen herausgeführte Werkstück 10 in einen in der Auswerfereinheit 21 ausgebildeten trichterförmigen Durchgang 51 fällt, der an seinem Ausgang das Werkstück 10 zwischen zwei verschwenkbare Ausgabeklappen 52 einleitet, die es an der gewünschten Stelle im Aufnahmebehälter 22 ablegen.

Die gezeigte Transportvorrichtung 5 gestattet es, die transportierten kurzen stabförmigen Werkstücke 10 lageorientiert in einem Aufnahmebehälter 22 abzulegen und damit diesen Schritt, der bislang von Hand oder über eine Robotertechnik gelöst wurde, kostengünstig und automatisiert ablaufen zu lassen. Die Drehpunkte der beiden Bahnabschnitte 6 und 14 der Transportvorrichtung 5 ermöglichen eine horizontale und vertikale Bewegung der Bahnführung der Anordnung, wodurch eine lageorientierte Ablage der Werkstücke in dem Aufnahmebehälter 22 möglich ist, bei der die Transportvorrichtung 5 eine relativ hohe Stückleistung von z. B. bis zu 180 Werkstücken pro Minute (oder mehr) befördern kann.

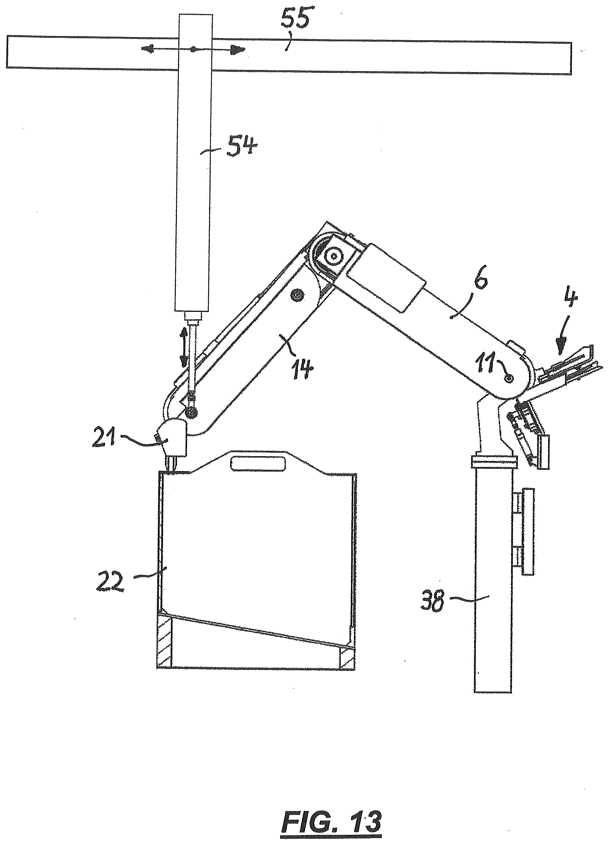

In Fig. 13 ist eine zu den in den Figuren 2 bis 7 gezeigten Ausführungsformen unterschiedliche Ausbildung einer erfindungsgemäßen Transportvorrichtung mit zwei Bahnabschnitten 6 und 14 gezeigt, bei der zur Ausführung der Relativbewegungen der Bahnabschnitte 6 und 14 zueinander eine Druckluftzylindereinheit 54 vorgesehen ist, die mit ihrem einen (in Fig. 13: oberen) Endbereich an einem Portal 55, in dessen Längsrichtung gemäß der Pfeildarstellung verfahrbar, montiert und an ihrem anderen Ende gelenkig am zweiten Bahnabschnitt 14, ebenfalls in den dort eingezeichneten zwei Pfeilrichtungen beweglich, angelenkt ist. Dabei ist das in Fig. 13 nur ganz prinzipiell gezeigte Portal 55 in geeigneter Weise stationär, z. B. am Grundgestell 38, angebracht.

Bei dieser Ausgestaltung der Transportvorrichtung entfallen alle bei der Ausführungsform nach den Figuren 1 bis 7 eingesetzten Druckzylinder 39, 40 bzw. 41, 42 und nur die am Portal 55 verfahrbar angebrachte Druckzylinder-Einheit 54 ist für das relative Verklappen der Bahnabschnitte 6 und 14 zueinander verantwortlich.

Die Kolbenstange der Druckzylinder-Einheit ist an ihrem unteren Ende ganz nahe am Bereich der Auswerfereinheit 21 am zweiten Bahnabschnitt 14 angelenkt, wodurch es möglich ist, die ausgeübten Verstellkräfte direkt am Bereich der Auswerfereinheit 21 am zweiten Bahnabschnitt 14 angreifen zu lassen.

Die aus den Bahnabschnitten 14 und 6 bestehende Anordnung ist im Anfangsbereich des ersten Bahnabschnitts 6, in der Nähe der Werkstückzuführung 4 im Bereich der Umlenkstelle 11, am Grundgestell 38 gestellfest und gelenkig gelagert.

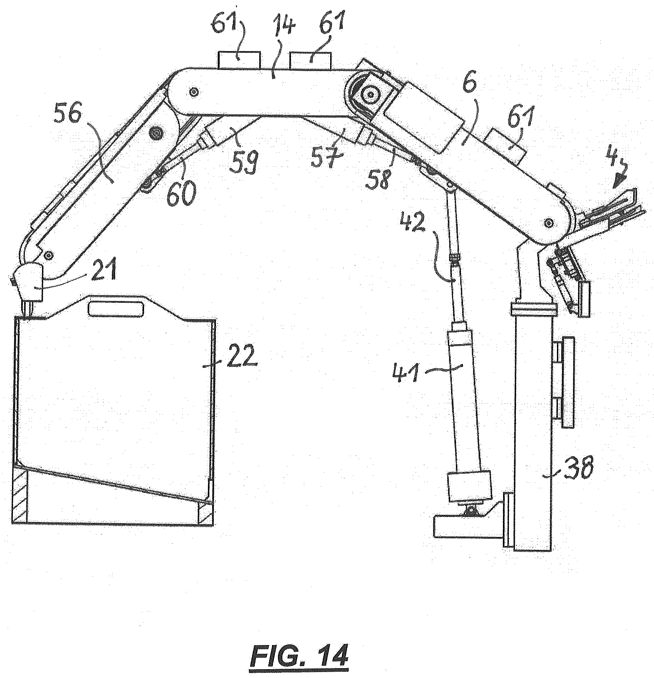

Fig. 14 zeigt eine weitere Ausführungsform einer erfindungsgemäßen Transportvorrichtung 5, die mit drei hintereinander geschalteten Bahnabschnitten 6, 14 und 56 arbeitet, wobei die Auswerfereinheit 21 am Ende des dritten Bahnabschnitts 56 angebracht ist.

Die Relativbewegung der verschiedenen Bahnabschnitte 6, 14, 56 zueinander wird über entsprechende Druckzylinder 41, 42 sowie 57 und 58 und noch 59 sowie 60 bewerkstelligt, die allesamt in einer Lage angebracht sind, wie sie aus Fig. 14 entnehmbar ist, worauf im einzelnen verwiesen wird.

Die Verwendung einer Ausführungsform der Transportvorrichtung 5 mit mehr als zwei Bahnabschnitten, etwa drei Bahnabschnitten (wie in Fig. 14 gezeigt) oder gar mit noch mehr Bahnabschnitten, gibt die Möglichkeit, eine größere Strecke zwischen der Aufnahme der Werkstücke an der Werkstückzuführung 4 und der Aufnahmestelle 22 realisieren zu können, etwa in einer Größenordnung von drei bis fünf Metern. Um dies zu bewerkstelligen, müßten bei einer Transportvorrichtung mit zwei Bahnabschnitten diese doch relativ lang ausgeführt werden, was insbesondere bei einer niedrigen Deckenhöhe in der Produktionshalle, in welcher die Transportvorrichtung 5 arbeitet, oftmals gar nicht möglich wäre.

Bei der Ausführungsform gemäß Fig. 14 sind den Bahnabschnitten 6 und 14 Kühleinheiten in Form von integrierten Lüftern 61 zugeordnet, wodurch der Transport der Werkstücke 10 über diese Bahnabschnitte 6 und 14 als Kühlstrecke dient. Mittels dieser Lüfter 61 können die transportierten Werkstücke 10 gekühlt werden, die nach dem Richten und Trennen eine relativ hohe Temperatur (von bis zu 200° C) haben.

Nach Durchlaufen solcher Bahnabschnitte als Kühlstrecken können die länglichen Werkstücke 10 dann direkt weiterverarbeitet werden.

Die Verwendung solcher Kühleinheiten 61 kann bei nur einem oder bei mehreren Bahnabschnitten vorgesehen werden, und zwar bei Anordnungen mit nur zwei oder von mehr als zwei Bahnabschnitten.

Die Ablage der Werkstücke 10, etwa in Form von Stäben, an der Ablagestelle kann z. B. in einen Aufnahmebehälter 22, wie er in den Figuren dargestellt ist, erfolgen, könnte gleichermaßen aber auch auf ein Ablagegestell, einen Tisch o. ä. vorgenommen werden.

## Patentansprüche

1. Vorrichtung zum Transport länglicher Werkstücke (10) an eine Aufnahmestelle (22) und zur Ablage an dieser, mit einer Transportbahn, die einen ersten (6) und mindestens einen diesem nachgeschalteten weiteren (14) Bahnabschnitt umfaßt, wobei dem ersten Bahnabschnitt (6) eine Werkstückzuführung (4) zugeordnet ist, mit einem Grundgestell (38), an dem der erste Bahnabschnitt (6) an seinem in Förderrichtung vorderen Endbereich um eine gestellfeste Achse (12) verschwenkbar gelagert ist, wobei die Bahnabschnitte (6, 14) mit ihren einander zugewandten Endbereichen jeweils um eine ihnen gemeinsame Gelenkstelle (15) relativ zueinander verschwenkbar sind, jedem Bahnabschnitt (6; 14) ein endloses Bürstenriemen-Paar (7; 20) zugeordnet ist, jeder Bahnabschnitt (6; 14) ein geradlinig verlaufendes Trum mit jeweils einer Umlenkstelle (11, 12; 12, 53) an seinen beiden Enden aufweist, alle Bürstenriemen-Paare (7', 7"; 20', 20")synchron angetrieben werden und an jeder Gelenkstelle (15) zwischen zwei Bahnabschnitten die zu transportierenden Werkstücke (10) vom Bürstenriemen-Paar (7) des vorhergehenden Bahnabschnitts (6) auf das (20) des folgenden Bahnabschnitts (14) übergeben werden, und mit einer dem Ende des letzten Bahnabschnitts (14) nachgeschalteten Auswerfereinheit (21), an der die angeförderten Werkstücke (10) über einen Abstreifer (50) einzeln aus dem Bürstenriemen-Paar (20) des letzten Bahnabschnitts (14) entnommen und an der Aufnahmestelle (22) lageorientiert abgelegt werden.

2. Vorrichtung nach Anspruch 1, **dadurch gekennzeichnet, daß** die Auswerfereinheit (21) über dem Abstreifer (50) nachgeschaltete Abgabeklappen (52) die Werkstücke (10) an der Aufnahmestelle (22) ablegt.

3. Vorrichtung nach Anspruch 1 oder 2, **dadurch gekennzeichnet, daß** die Werkstück-Zuführung (4) mit einem Einstoßer (45) zum Eindrücken der angelieferten Werkstücke (10) in die Bürsten des Bürstenriemen-Paares (7) des ersten Bahnabschnitts (6) versehen ist.

4. Vorrichtung nach Anspruch 3, **dadurch gekennzeichnet, daß** das Eindrücken der Werkstücke (10) in die Bürsten des Bürstenriemen-Paares (7) des ersten Bahnabschnitts (6) bei laufendem Antriebsmotor (16) erfolgt.

5. Vorrichtung nach einem der Ansprüche 1 bis 4, **dadurch gekennzeichnet, daß** am Einlauf des ersten Bahnabschnitts (6) wie auch am Auslauf aller folgenden Bahnabschnitte (14) jeweils ein Niederhalter (32) vorgesehen ist, mittels dessen die Werkstücke (10) im Bereich der dortigen Umlenkstelle (11; 53) in der Umlaufbahn gehalten werden.

6. Vorrichtung nach einem der Ansprüche 1 bis 5, **dadurch gekennzeichnet, daß** entlang des geradlinigen Trums aller Bahnabschnitte (6, 14) jedem Bürstenriemen derselben ein Führungsblech (8) zugeordnet ist, das die zu transportierenden Werkstücke (10) seitlich und an deren Oberseite zumindest teilweise überdeckt und dabei in den Bürsten hält.

7. Vorrichtung nach einem der Ansprüche 1 bis 6, **dadurch gekennzeichnet, daß** bei Verwendung von zwei Bahnabschnitten am Grundgestell (38) eine erste Verstelleinrichtung (39) mit einem ausfahrbaren Verstellglied (40) gestellfest und verschwenkbar angebracht ist, sowie das Verstellglied (40) in einem Abstand von der gemeinsamen Gelenkstelle (15) beider Bahnabschnitte (6, 14) am zweiten Bahnabschnitt (14) angelenkt ist.

8. Vorrichtung nach Anspruch 7, **dadurch gekennzeichnet, daß** am Grundgestell (38) noch eine weitere Verstelleinrichtung (41) angebracht ist, die mit ihrem einen Ende am Grundgestell (38) gestellfest, aber verschwenkbar befestigt und mit ihrem anderen Ende an einem Gehäuse der ersten Verstelleinrichtung (39) gelenkig gelagert ist.

9. Vorrichtung nach Anspruch 7 oder 8, **dadurch gekennzeichnet, daß** die Verstelleinrichtungen (39, 41) als Elektrozylinder ausgeführt sind.

10. Vorrichtung nach einem der Ansprüche 1 bis 9, **dadurch gekennzeichnet, daß** im Bereich der gemeinsamen Gelenkstelle (15) jeweils zweier aufeinanderfolgender Bahnabschnitte (6, 14) auf der Oberseite des Bürstenriemen-Paares (20) des folgenden Bahnabschnittes (14) jedem Bürstenriemen ein Federband (33, 34) zugeordnet ist, das an seinen beiden Enden an jeweils eine federgespannte Rollenkette (35) angeschlossen ist und dadurch in jeder relativen Verschwenkstellung beider Bahnabschnitte (6, 14) zueinander, die Gelenkstelle (15) umlaufend, in Position gehalten wird.

11. Vorrichtung nach einem der Ansprüche 1 bis 10, **dadurch gekennzeichnet, daß** in der Auswerfereinheit (21) zwischen dem Abstreifer (50) und den Abgabeklappen (52) ein trichterförmiger Durchgang (51) zur lageorientierten Einführung der Werkstücke (10) zwischen die Abgabeklappen (52) vorgesehen ist.

12. Vorrichtung nach einem der Ansprüche 8 bis 11, **dadurch gekennzeichnet, daß** eine zentrale Steuereinrichtung zur Steuerung des Antriebmotors (16), der Verstelleinrichtungen (39, 41) und der Werkstück-Zuführung (4) vorgesehen ist.

13. Vorrichtung nach einem der Ansprüche 1 bis 12, **dadurch gekennzeichnet, daß** die Bürstenriemen des Bürstenriemen-Paares (20) des zweiten Bahnabschnitts (14) voneinander um einen kleineren Abstand entfernt sind als die Bürstenriemen des Bürstenriemen-Paares (7) des ersten Bahnabschnitts (6), wobei sie mittig zu letzterem ausgerichtet sind.

14. Vorrichtung nach einem der Ansprüche 1 bis 13, **dadurch gekennzeichnet, daß** die gemeinsame Gelenkstelle (15) von erstem und zweitem Bahnabschnitt (6, 14) eine zentrale Drehwelle (17) umfaßt, auf der Antriebsräder für die Bürstenriemen der Bürstenriemen-Paare (7, 20) beider Bahnabschnitte (6, 14) angebracht sind und die an einen seitlich angeordneten Antriebsmotor (16) angeschlossen ist.

15. Vorrichtung nach einem der Ansprüche 1 bis 14, **dadurch gekennzeichnet, daß** eine Einrichtung vorgesehen ist, die dazu eingerichtet ist, den Abstand (A) zwischen den Bürstenriemen des Bürstenriemen-Paares (7) am ersten Bahnabschnitt (6) verstellen zu können.

16. Vorrichtung nach Anspruch 15, **dadurch gekennzeichnet, daß** die Einrichtung ein Handrad (24) zur Verstellung des Abstandes (A) zwischen den Bürstenriemen des Bürstenriemen-Paares (7) am ersten Bahnabschnitt (6) umfaßt.

17. Vorrichtung nach einem der Ansprüche 1 bis 6 oder 10 bis 16, **dadurch gekennzeichnet, daß** drei aufeinanderfolgende Bahnabschnitte (6, 14, 56) vorgesehen sind.

18. Vorrichtung nach einem der Ansprüche 1 bis 16, **dadurch gekennzeichnet, daß** ein Portal (55) vorgesehen ist, an dem eine Druckzylindereinheit (54) angebracht ist, die mit ihrem einen Ende am Portal (55) verfahrbar montiert und mit ihrem anderen Ende am letzten Bahnabschnitt (56) angelenkt ist.

19. Vorrichtung nach Anspruch 18, **dadurch gekennzeichnet, daß** die Druckzylindereinheit (54) am letzten Bahnabschnitt (56) nahe der Auswerfereinheit (21) angelenkt ist.

20. Vorrichtung nach einem der Ansprüche 1 bis 19, **dadurch gekennzeichnet, daß** der Werkstückzuführung (4) eine Drahtricht- (1) und Abschneidemaschine (2) zur Zuführung der länglichen Werkstücke (10) vorgeschaltet ist.

21. Vorrichtung nach einem der Ansprüche 1 bis 20, **dadurch gekennzeichnet, daß** ein Bahnabschnitt oder mehrere Bahnabschnitte (6, 14) mit Kühleinheiten (61) versehen sind.

22. Vorrichtung nach Anspruch 21, **dadurch gekennzeichnet, daß** als Kühleinheiten (61) Lüfter vorgesehen sind.
